(19) **Europäisches Patentamt / European Patent Office / Office européen des brevets**

(11) **EP 4 668 399 A1**

(12) **EUROPEAN PATENT APPLICATION**
published in accordance with Art. 153(4) EPC

(43) Date of publication:
**24.12.2025 Bulletin 2025/52**

(21) Application number: **24854516.2**

(22) Date of filing: **16.08.2024**

(51) International Patent Classification (IPC):
**H01M 10/0562** (2010.01)    **H01M 4/62** (2006.01)

(52) Cooperative Patent Classification (CPC):
**H01M 4/62; H01M 10/0562;** Y02E 60/10;
Y02P 70/50

(86) International application number:
**PCT/KR2024/096021**

(87) International publication number:
**WO 2025/037965 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   15.08.2023   US 202318234286
                 19.09.2023   KR 20230124429
                 13.08.2024   KR 20240108292

(71) Applicants:
• **LG Energy Solution, Ltd.
  Seoul 07335 (KR)**
• **The Regents of the University of California
  Oakland, CA 94607-5200 (US)**

(72) Inventors:
• **LEE, Jung Pil
  Daejeon 34122 (KR)**
• **SONG, Min Sang
  Daejeon 34122 (KR)**
• **CHEN, Zheng
  San Diego, California 92130 (US)**
• **LEE, Dong Ju
  La Jolla, California 92092 (US)**

(74) Representative: **Goddar, Heinz J.
Boehmert & Boehmert
Anwaltspartnerschaft mbB
Pettenkoferstrasse 22
80336 München (DE)**

(54) **METHOD FOR MANUFACTURING SOLID ELECTROLYTE MEMBRANE**

(57)    Methods for preparing a solid electrolyte membrane are described. More particularly, a small amount of binder may be fiberized through a dry calendering process to prepare a solid electrolyte membrane. Since the fiberized binder is included in an entangled state within the solid electrolyte membrane, it shows excellent characteristics in both ionic conductivity and strength.

**FIG. 2a**

Example 2    Example 3    Example 1    Example 4

**Description**

**Technical Field**

The present application claims the benefit of priority to US Patent Application No. 18/234,286, filed on August 15, 2023, Korean Patent Application No. 10-2023-0124429, filed on September 19, 2023 and Korean Patent Application No. 10-2024-0108292, filed on August 13, 2024.

The present disclosure relates to a method for preparing a solid electrolyte membrane, as well as a solid electrolyte membrane thereof, and an all-solid-state battery comprising the solid electrolyte membrane.

**Background**

Lithium secondary batteries have certain limitations in terms of capacity, safety, output, large size, and miniaturization. Thus, there continues to be a need for alternative battery technology, which can address these shortcomings.

Some alternatives to lithium secondary batteries include: a metal-air battery, with very large theoretical capacity in terms of capacity; an all-solid-state battery with no risk of explosion in terms of safety; a supercapacitor in terms of output; a sodium-sulfur battery (NaS battery); and a redox flow battery (RFB) in terms of large size, a thin film battery in terms of miniaturization.

In an all-solid-state battery, a liquid electrolyte (as used in conventional lithium secondary batteries) is replaced by a solid electrolyte. Thus, it is possible to avoid using a flammable solvent in the battery, and safety can be improved, e.g., by avoiding the risk of ignition or explosion due to the decomposition or reaction of the conventional electrolytic solution. In addition, since the all-solid-state battery may use Li metal or Li alloy as a negative electrode material, an all-solid-state battery has the advantage of dramatically improving energy density relative to a mass and volume of a battery.

However, because the all-solid-state battery uses a solid electrolyte, ionic conductivity may be lowered. In addition, when a liquid electrolyte is used together as a means to secure the ionic conductivity of the solid electrolyte, there is a problem in that the intensity is lowered.

In general, in order to prevent degradation of performance and processability of batteries while securing the safety of the all-solid-state battery, both the ionic conductivity and strength of the solid electrolyte should be maintained at a certain level.

Thus, there remains a need in the art for solid electrolytes that have both sufficient ionic conductivity and strength, as well as a suitable manufacturing process for preparing such solid electrolytes.

Prior Art Document

Patent Document

(Patent Document 1) Korean Patent Publication No. 2022-0095689

**Technical Problem**

As a result of various studies to solve the above problems, the present inventors have confirmed that, in a solid electrolyte membrane prepared through a calendering process, a solid electrolyte membrane having excellent ionic conductivity and strength may be prepared when the solid electrolyte membrane is prepared by controlling the optimal temperature, orientation, and loop. The calendaring process comprises physically mixing a sulfide-based solid electrolyte and/or a halide-based solid electrolyte and a binder, followed by fiberization of the binder. A structure formed by the fiberized binder may vary depending on the temperature, orientation and loop of the calendering process.

Accordingly, one aspect of the present disclosure is directed to providing a method for preparing a solid electrolyte membrane with improved ionic conductivity and strength.

**Technical Solution**

To achieve the above object, one aspect of the present disclosure provides a method for preparing a solid electrolyte membrane including the steps of: (S1) mixing solid electrolyte particles and a binder; and (S2) applying the mixture obtained in step (S1) to a calendering process to mold the mixture into a film form, in which the binder is fiberized by the mixing.

In addition, one aspect of the present disclosure provides a method for preparing a solid electrolyte membrane, wherein a temperature of the calendering process is 50°C to 200°C.

In addition, one aspect of the present disclosure provides a method for preparing a solid electrolyte membrane, wherein the calendering process is performed for 5 to 50 loops.

In addition, one aspect of the present disclosure provides a method for preparing a solid electrolyte membrane, wherein the calendering process is performed uniaxially or biaxially.

In addition, one aspect of the present disclosure provides a method for preparing a solid electrolyte membrane, wherein the steps (S1) and (S2) are performed solvent-free.

In addition, one aspect of the present disclosure provides a method for preparing a solid electrolyte membrane, wherein the solid electrolyte particles include one or more selected from the group consisting of sulfide-based solid electrolyte particles and halide-based solid electrolyte particles.

In addition, one aspect of the present disclosure provides a method for preparing a solid electrolyte membrane, wherein the solid electrolyte membrane is made of solid electrolyte particles and a fibrous binder.

In addition, one aspect of the present disclosure provides a method for preparing a solid electrolyte membrane, wherein the fibrous binder includes one or more selected from the group consisting of polytetrafluoroethylene (PTFE) and a copolymer containing the same.

In addition, one aspect of the present disclosure provides a method for preparing a solid electrolyte membrane, wherein the fibrous binder is included in an amount of 2 wt% or less based on a total weight of the solid electrolyte membrane.

In addition, one aspect of the present disclosure provides a method for preparing a solid electrolyte membrane, wherein the fibrous binder is included in a dispersed state in the solid electrolyte membrane.

In addition, one aspect of the present disclosure provides a method for preparing a solid electrolyte membrane, wherein an interface between the solid electrolyte and the fibrous binder is bonded.

In addition, one aspect of the present disclosure provides a method for preparing a solid electrolyte membrane, wherein an ionic conductivity of the solid electrolyte membrane is 0.5 to 10 S/cm.

In addition, one aspect of the present disclosure provides a method for preparing a solid electrolyte membrane, wherein a tensile strength of the solid electrolyte membrane is 45 to 1000 kPa.

**Advantageous Effects**

Since the method for preparing a solid electrolyte membrane according to one aspect of the present disclosure includes a structure in which fibrous binders formed by fiberizing the binder during a dry process performed without using a solvent are entangled with each other, even if a small amount of the fibrous binder is used, it is possible to obtain excellent tensile strength.

In addition, by controlling the temperature, orientation, and loop in a calendering process to control a degree of fiberization of a binder and an internal structure formed by the fiberized binder after solid electrolyte particles and the binder are physically mixed, it is possible to improve the strength of the solid electrolyte membrane.

Brief Description of the Drawings

FIG. 1 is a schematic diagram illustrating an internal structure of a solid electrolyte membrane according to an embodiment of the present invention.

FIG. 2A is a scanning electron micrograph of the solid electrolyte membrane according to a temperature of a calendering process.

FIG. 2B is a scanning electron micrograph of the solid electrolyte membrane according to an orientation of the calendering process.

FIG. 2C is a scanning electron micrograph of the solid electrolyte membrane according to a loop of the calendering process.

FIG. 3A is a graph illustrating a correlation between the temperature and the tensile strength of the calendering process.

FIG. 3B is a graph illustrating a correlation between the orientation and the tensile strength of the calendering process.

FIG. 3C is a graph illustrating a correlation between the loop of the calendering process and the ionic conductivity and the tensile strength of the solid electrolyte membrane.

**Summary**

Hereinafter, the present invention will be described in more detail to help the understanding of the present invention.

As used herein, the term "three-dimensional network structure" may be a structure in which fibrous binders dispersed and included in a solid electrolyte membrane are entangled with each other, and a structure including a frame made of the fibrous binder and an internal space formed by the frame.

**Method for preparing a solid electrolyte membrane**

One aspect of the present disclosure relates to a method for preparing a solid electrolyte membrane.

A method for preparing a solid electrolyte membrane according to one aspect of the present disclosure includes: (S1) mixing solid electrolyte particles and a binder; and (S2) applying the mixture obtained in step (S1) to a calendering process to mold the mixture into a film form, wherein the binder is fiberized in the calendering process.

In this case, the calendering process means a process of molding into a film form using two rollers.

In an embodiment of one aspect of the present disclosure, in the step (S1), solid electrolyte particles and a binder are mixed, but may be physically mixed by a dry process in which a solvent is not used.

In addition, since the solid electrolyte particles and the binder are physically mixed without a separate chemical reaction, the mixing may be referred to as physical mixing. The mixing may be performed by mortar (mortar & pestle), ball mixing, or roll pressing.

In addition, the binder may be fiberized during the physical mixing. The fiberized binder may be referred to as a fibrous binder, and the fibrous binders may be dispersed and entangled with each other to form a three-dimensional network structure.

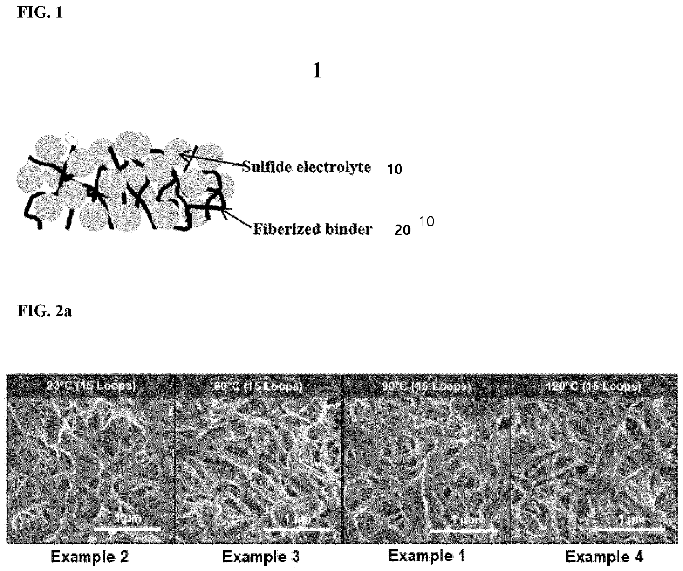

FIG. 1 is a schematic diagram illustrating an internal structure of a solid electrolyte membrane according to an embodiment of the present invention.

Referring to FIG. 1, a solid electrolyte 10 exists in a particulate state inside the solid electrolyte membrane 1, and a fibrous binder 2 may be included in an entangled state. Specifically, the fibrous binder 2 may form a three-dimensional network structure that is dispersed and entangled with each other. The three-dimensional network structure includes a frame made of the fibrous binder 2 and a void which is a space between the frames, and the solid electrolyte 10 particles may be located in the void. It may be a sulfide-based and/or halide-based solid electrolyte of the solid electrolyte 10.

In an embodiment of the present invention, the temperature of the calendering process may be 50°C to 200°C. Specifically, the temperature may be 50°C or higher, 70°C or higher, or 80°C or higher, and may be 100°C or lower, 120°C or lower, 140°C or lower, 160°C or lower, 180°C or lower, or 200°C or lower. When the temperature is less than 50°C, less fiberization of the binder occurs and the strength of the solid electrolyte membrane may be lowered, and when the temperature exceeds 200°C, the strength of the solid electrolyte membrane may no longer increase even if the temperature increases, or the electrolyte or binder material may deteriorate.

In an embodiment of the present invention, the calendering process may be performed for 5 to 50 loops. Specifically, the number of loops may be 5 or more, 8 or more, 10 or more, or 12 or more, and may be 20 or less, 30 or less, 40 or less, or 50 or less. When the loop is less than 5, the strength of the solid electrolyte membrane may decrease due to the less fiberization of the binder, and when the loop exceeds 50, the strength of the solid electrolyte membrane may not increase or the processability may deteriorate even if the loop increases.

In an embodiment of the present invention, the alignment of the calendering process may be performed uniaxially or biaxially. In this case, the uniaxial means that the calendering proceeds in one direction, and the biaxial means that the calendering proceeds in one direction and then proceeds alternately in a vertical direction to a horizontal plane of the electrolyte membrane.

When the calendering process is performed uniaxially, the fiberization of the binder has directionality. On the other hand, when the calendering process is performed biaxially, the fiberization of the binder has several directionalities evenly, so the difference in strength according to the direction decreases.

In an embodiment of the present invention, the pressure applied to the mixture to form a film in the calendaring process may be 1 to 50 kgf/cm. Specifically, the pressure may be 1 kgf/cm or more, 2 kgf/cm or more, 3 kgf/cm or more, 4 kgf/cm or more, 5 kgf/cm or more, 6 kgf/cm or more, 7 kgf/cm or more, 8 kgf/cm or more, 9 kgf/cm or more, or 10 kgf/cm or more, and may be 50 kgf/cm or less, 45 kgf/cm or less, 40 kgf/cm or less, 35 kgf/cm or less, 30 kgf/cm or less, 25 kgf/cm or less, or 20 kgf/cm or less. If the above pressure is less than 1 kgf/cm, the degree of fiberization of the binder may be reduced, requiring an increase in the number of loops in the calendaring process. If it exceeds 50 kgf/cm, the uniformity of the formed film may be reduced. At this time, the above pressure may be a linear pressure.

In an embodiment of the present invention, the solid electrolyte membrane is made of the solid electrolyte and the fibrous binder, and the solid electrolyte includes one or more selected from the group consisting of a sulfide-based solid electrolyte and a halide-based solid electrolyte.

In an embodiment of the present invention, an interface between the solid electrolyte and the fibrous binder may be bonded.

Since the interface between the solid electrolyte and the fibrous binder is firmly adhered by pressing during the preparing process, it is possible to prevent the strength of the solid electrolyte membrane from being lowered even though a small amount of the fibrous binder is used. In addition, since the adhesion is also made between the solid electrolytes, it may be more advantageous to improve the strength of the solid electrolyte membrane.

In an embodiment of the present invention, the ionic conductivity of the solid electrolyte membrane may be 0.5 to 10 S/cm. Specifically, the ionic conductivity may be 0.5 S/cm or more, 0.6 S/cm or more, 0.8 S/cm or more, 1 S/cm or more, 1.5 S/cm or more, or 2 S/cm or more, and may be 3 S/cm or less, 5 S/cm or less, 8 S/cm or less, or 10 S/cm or less. The ionic conductivity may be measured at room temperature (25°C).

In an embodiment of the present invention, the tensile strength of the solid electrolyte membrane may be 45 to 1000 kPa. The tensile strength of the solid electrolyte membrane may be 45 kPa or more, 50 kPa or more, 80 kPa or more, 100 kPa or more, 120 kPa or more, or 150 kPa or more, and may be 200 kPa or less, 300 kPa or less, 500 kPa or less, 700 kPa or less, 900 kPa or less, or 1000 kPa or less.

In an embodiment of the present invention, the solid electrolyte membrane may be solvent-free.

Since the solid electrolyte membrane is prepared by a dry process of physically mixing a sulfide-based and/or halide-based solid electrolyte and a binder, the solid electrolyte membrane does not include any solvent. In addition, the binder is fiberized by pressurization during the dry process, and the fibrous binders are dispersed and entangled with each other to form the three-dimensional network structure. Accordingly, it is possible to prepare the solid electrolyte membrane with improved strength due to the structure formed by the fibrous binder even by using only a small amount of the binder.

In addition, since a separate solvent is not used, it is possible to prevent the phenomenon in which the crystal structure of the sulfide-based and/or halide-based solid electrolyte is destroyed due to the solvent and the ionic conductivity is lowered.

In general, a wet process used to prepare a solid electrolyte membrane uses a solvent capable of dissolving a binder, which is located between solid electrolyte particles to have adhesion.

On the other hand, the dry process according to one aspect of the present disclosure physically stretches an initial particulate binder to be fibrous without using a solvent. Therefore, the structure of the binder in the prepared solid electrolyte membrane is different from the structure formed by the wet process, and the physical properties of the solid electrolyte membrane or the solid electrolyte membrane prepared by the wet process may be improved. In the above, the initial particulate binder is physically deformed by shear force in a step of mixing with the electrolyte particles. A mortar, ball mill, or roll press may be introduced in mixing to induce the physical deformation. In addition, as the binder capable of inducing the physical deformation well, a binder such as PTFE, which is physically very weak and relatively easily fibrous, may be used.

In an embodiment of the present invention, the solid electrolyte may include the sulfide-based solid electrolyte and/or the halide-based solid electrolyte.

In addition, the solid electrolyte may be included in 98 wt% or more based on the total weight of the solid electrolyte membrane. Specifically, the content of the solid electrolyte may be 98 wt% or more, 98.5 wt% or more, or 99 wt% or more. When the content of the solid electrolyte is less than 98 wt%, the ionic conductivity of the solid electrolyte membrane may be lowered. In addition, an upper limit of the content of the solid electrolyte is not particularly limited, but may be, for example, 99.8 wt% or less, and when the upper limit exceeds 99.8 wt%, the content of the binder may be relatively reduced, so the tensile strength may be slightly lowered.

In addition, the solid electrolyte may be in the form of particles, and a particle diameter D50 of the solid electrolyte may be 10 nm to 10 $\mu$m, and specifically 10 nm or more, 100 nm or more, 1 $\mu$m or more, 2 $\mu$m or more, or 3 $\mu$m or more, and may be 5 $\mu$m or less, 7 $\mu$m or less, 9 $\mu$m or less, or 10 $\mu$m or less. When the particle diameter D50 of the solid electrolyte is less than 10 nm, the tensile strength may be lowered, and when the particle diameter D50 of the solid electrolyte exceeds 10 $\mu$m, the surface of the solid electrolyte membrane is not uniform, so resistance with an electrode may increase.

In an embodiment of the present invention, the sulfide-based solid electrolyte may include one or more selected from the group consisting of LiPSX (X = Cl, Br or I), LiGePS, and LiPS. However, the sulfide-based solid electrolyte is not limited thereto, and sulfide-based solid electrolytes commonly used in the art may be widely used.

In some embodiments, the sulfide-based solid electrolyte particles comprise a composite as shown Formula 1 or mixtures thereof:

[Formula 1] $\quad$ $Li_aM_bS_cX_d$

wherein:

M is selected from P, Sn, Sb, As and Ge;
X is selected from Cl, Br and I; and
wherein $5 \leq a \leq 7.5$, $0.5 \leq b \leq 1.5$, $4 \leq c \leq 6$ and $0.5 \leq d \leq 2$.

In some embodiments, the sulfide-based solid electrolyte particles comprise $Li_6PS_5Cl$.

In an embodiment of the present invention, the halide-based solid electrolyte may be represented by Formula 2

below:

$$<\text{Formula 2}> \qquad \text{Li}_{6-3a}\text{M}_a\text{Br}_b\text{Cl}_c$$

wherein, M is a metal other than Li, a is $0 < a < 2$, b is $0 \le b \le 6$, c is $0 \le c \le 6$, and b + c=6. In some aspects, M is a metal other than Li. Preferably, M is selected from Sc, Y, B, Al, Ga and In, wherein $0 < a < 2$, $0 \le b \le 6$, $0 \le c \le 6$ and b+c=6.

For example, the halide-based solid electrolyte may include one or more selected from the group consisting of $\text{Li}_3\text{YBr}_6$, $\text{Li}_3\text{YCl}_6$ and $\text{Li}_3\text{YBr}_2\text{Cl}_4$.

In an embodiment of the present invention, the binder may be fiberized during the dry process in which the binder is mixed with the sulfide-based and/or halide-based solid electrolyte and pressurized, and the fibrous binder may be dispersed and entangled with each other to form the three-dimensional network structure.

The binder may be one or more selected from the group consisting of polytetrafluoroethylene (PTFE) and a copolymer including the same, but is not limited thereto. The binder, which has a property of being easily stretched during the dry process due to its low ductility strength and is fiberized to become the fibrous binder, may be widely used.

In addition, the binder may be included in an amount of 2 wt% or less based on the total weight of the solid electrolyte membrane. Specifically, the content of the binder may be 2 wt% or less, 1.5 wt% or less, or 1 wt% or less. When the content of the binder exceeds 2 wt%, the ionic conductivity of the solid electrolyte membrane may be lowered. In addition, a lower limit of the binder is not particularly limited, but may be, for example, 0.2 wt% or more, and when the lower limit of the binder is less than 0.2 wt%, the tensile strength may be slightly lowered.

In addition, the aspect ratio of the fibrous binder may be 15 to 500. Specifically, the aspect ratio may be 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, 95 or more, or 100 or more, and may be 500 or less, 450 or less, 400 or less, 350 or less, 300 or less, 250 or less, or 200 or less. When the aspect ratio of the fibrous binder is less than 15, it is difficult to form a three-dimensional network structure by the fibrous binder, and thus the strength of the solid electrolyte membrane may be lowered, thereby deteriorating the processability during battery assembly. If the aspect ratio of the above fibrous binder exceeds 200, the process for manufacturing the fibrous binder having the aspect ratio may be complicated, thereby reducing the processability.

**All-solid-state battery**

One aspect of the present disclosure also relates to an all-solid-state battery including the solid electrolyte membrane.

The all-solid-state battery according to the present invention includes the solid electrolyte membrane; a positive electrode formed on one surface of the solid electrolyte membrane; and an negative electrode formed on the other surface of the solid electrolyte.

In an embodiment of the present invention, the positive electrode may include a positive electrode active material, a conductive material, and a binder.

In one aspect of the present disclosure, the positive electrode included in the all-solid-state battery includes a positive electrode active material layer, and the positive electrode active material layer may be formed on one surface of a positive electrode current collector.

The positive electrode active material layer includes a positive electrode active material, a conductive material, and a binder.

In addition, the positive electrode active material is not particularly limited as long as it is a material capable of reversibly occluding and releasing lithium ions, and examples thereof may include a layered compound such as lithium cobalt oxide ($\text{LiCoO}_2$), lithium nickel oxide ($\text{LiNiO}_2$), $\text{Li}[\text{Ni}_x\text{Co}_y\text{Mn}_z\text{M}_v]\text{O}_2$ (wherein, M is any one or two or more elements selected from the group consisting of Al, Ga, and In; $0.3 \le x < 1.0$, $0 \le y$, $z \le 0.5$, $0 \le v \le 0.1$, $x + y + z + v = 1$), and $\text{Li}(\text{Li}_a\text{M}_{b-a-b'}\text{M}'_{b'})\text{O}_{2-c}\text{A}_c$ (wherein, $0 \le a \le 0.2$, $0.6 \le b \le 1$, $0 \le b' \le 0.2$, $0 \le c \le 0.2$; M includes one or more selected from the group consisting of Mn, Ni, Co, Fe, Cr, V, Cu, Zn, and Ti; M' is one or more selected from the group consisting of Al, Mg, and B, and A is one or more selected from the group consisting of P, F, S, and N.) or compounds substituted with one or more transition metals; lithium manganese oxides such as $\text{Li}_{1+y}\text{Mn}_{2-y}\text{O}_4$ (wherein, y is 0 to 0.33), $\text{LiMnO}_3$, $\text{LiMn}_2\text{O}_3$, and $\text{LiMnO}_2$; lithium copper oxide ($\text{Li}_2\text{CuO}_2$); vanadium oxides, such as $\text{LiV}_3\text{O}_8$, $\text{LiFe}_3\text{O}_4$, $\text{V}_2\text{O}_5$, and $\text{Cu}_2\text{V}_2\text{O}_7$; Ni site type lithium nickel oxides represented by the formula $\text{LiMn}_{2-y}\text{M}_y\text{O}_2$, (wherein, M = Co, Mn, Al, Cu, Fe, Mg, B or Ga, and y is 0.01 to 0.3); lithium manganese composite oxides represented by the formula $\text{LiMn}_{2-y}\text{M}_y\text{O}_2$ (wherein, M is Co, Ni, Fe, Cr, Zn, or Ta, and y is from 0.01 to 0.1) or $\text{Li}_2\text{Mn}_3\text{MO}_8$ (wherein, M is Fe, Co, Ni, Cu or Zn); $\text{LiMn}_2\text{O}_4$ in which Li part of the formula is substituted with an alkaline earth metal ion; disulfide compounds; $\text{Fe}_2(\text{MoO}_4)_3$, etc., but is not limited thereto.

In addition, the positive electrode active material may be included in an amount of 60 to 80 wt% based on the total weight of the positive electrode active material layer. Specifically, the content of the positive electrode active material may be 60 wt% or more, 65 wt% or more, or 68 wt% or more, and may be 72 wt% or less, 75 wt% or less, or 80 wt% or less. When the content of the positive electrode active material is less than 60 wt%, the battery performance may be lowered, and when the content of the positive electrode active material exceeds 80 wt%, material transfer resistance may increase.

In addition, the conductive material is not particularly limited as long as it prevents side reactions in the internal environment of the all-solid-state battery and has excellent electrical conductivity without causing the chemical change in the battery. As the typical conductive material, graphite or conductive carbon may be used. Examples of the conductive material may include graphite such as natural graphite and artificial graphite; carbon black such as carbon black, acetylene black, ketjen black, denka black, thermal black, channel black, furnace black, lamp black, and summer black; a carbon-based material whose crystal structure is graphene or graphite; conductive fibers such as carbon fibers and metal fibers; fluorinated carbon; metal powders such as aluminum powder and nickel powder; conductive whiskers such as zinc oxide and potassium titanate; and conductive oxides such as titanium oxide; conductive polymers such as polyphenylene derivatives alone or in combination of two or more, but are not necessarily limited thereto. Preferably, the conductive material may include vapor-grown carbon fiber (VGCF).

The conductive material may be typically included in an amount of 1% to 5 wt% based on the total weight of the positive electrode active material layer, and specifically, the content of the conductive material may be 1 wt% or more, 1.5 wt% or more, or 2 wt% or more, and may be 4 wt% or less, 4.5 wt% or less, or 5 wt% or less. When the content of the conductive material is too small, such as less than 1 wt%, it is difficult to expect an effect of improving electrical conductivity or the electrochemical characteristics of the battery may be deteriorated, and when the content of the conductive material is too large, exceeding 5 wt%, the amount of the positive electrode active material is relatively small, and as a result, the capacity and energy density may be lowered. A method of including a conductive material in a positive electrode is not particularly limited, and a common method known in the art, such as mixing with a positive electrode active material and coating, may be used.

In addition, the binder is a component that assists in the bonding of the positive electrode active material and the conductive material and the bonding to the current collector. The binder may include one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, an acrylic resin, a phenolic resin, an epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylates, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may include polytetrafluoroethylene (PTFE).

In addition, the binder may be included in an amount of 0.5 wt% to 4 wt% based on the total weight of the positive electrode active material layer, and specifically, the content of the binder may be 0.5 wt% or more, 1 wt% or more, or 1.5 wt% or more, and may be 3 wt% or less, 3.5 wt% or less, or 4 wt% or less. When the content of the binder is less than 0.5 wt%, the adhesion between the positive electrode active material and the positive electrode current collector may be lowered, and when the content of the binder exceeds 4 wt%, the adhesion between the positive electrode active material and the positive electrode current collector may be improved, but the content of the positive electrode active material is reduced as much, so the battery capacity may be reduced.

In addition, the positive electrode current collector supports the positive electrode active material layer and serves to transfer electrons between an external conductor and the positive electrode active material layer.

The positive electrode current collector is not particularly limited as long as it has high electronic conductivity without causing the chemical change in the all-solid-state battery. For example, as the positive electrode current collector, copper, stainless steel, aluminum, nickel, titanium, palladium, fired carbon, copper or stainless steel whose surface is treated with carbon, nickel, silver, etc., an aluminum-cadmium alloy, etc., may be used.

The positive electrode current collector may have a fine concavo-convex structure on the surface of the positive electrode current collector or employ a three-dimensional porous structure in order to enhance bonding strength with the positive electrode active material layer. Accordingly, the positive electrode current collector may include various forms such as a film, a sheet, a foil, a mesh, a net, a porous material, a foam, and a nonwoven fabric.

The positive electrode as described above may be prepared according to a conventional method, and specifically, may be prepared by coating and drying a composition for forming a positive electrode active material layer prepared by mixing a positive electrode active material, a conductive material, and a binder on an organic solvent and optionally compression-molding the composition on the current collector to improve the electrode density. In this case, as the organic solvent, it is preferable to use an organic solvent that may uniformly disperse the positive electrode active material, the binder, and the conductive material and may be easily evaporated. Specifically, the organic solvent may include acetonitrile, methanol, ethanol, tetrahydrofuran, water, isopropyl alcohol, etc.

In one aspect of the present disclosure, the positive electrode included in the all-solid-state battery includes an negative electrode active material layer, and the negative electrode active material layer may be formed on one surface of an negative electrode current collector.

The positive electrode active material may include a material capable of reversibly intercalating or deintercalating lithium (Li+), a material capable of reacting with lithium ions to reversibly form a lithium-containing compound, lithium metal, or a lithium alloy.

The material capable of reversibly intercalating or deintercalating lithium ions (Li+) may be, for example, crystalline carbon, amorphous carbon, or a mixture thereof. The material capable of reversibly forming the lithium-containing compound by reacting with the lithium ion (Li+) may be, for example, tin oxide, titanium nitrate, or silicon. The lithium alloy may be an alloy lithium(Li) and of metals selected from the group consisting of, for example, indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal or lithium-indium alloy (Li-In), and specifically, may be may be in the form of a lithium metal or lithium thin film or a lithium-indium alloy thin film or powder.

The negative electrode active material may be included in an amount of 40 to 80 wt% based on the total weight of the negative electrode active material layer. Specifically, the content of the negative electrode active material may be 40 wt% or more or 50 wt% or more, and 70 wt% or less or 80 wt% or less. When the content of the negative electrode active material is less than 40 wt%, the connectivity between the wet negative electrode active material layer and the dry negative electrode active material layer may be insufficient, and when the content of the negative electrode active material exceeds 80 wt%, the mass transfer resistance may increase.

In addition, the binder is as described above for the positive electrode active material layer.

In addition, the conductive material is as described above for the positive electrode active material layer.

In addition, the negative electrode current collector is not particularly limited as long as it does not cause the chemical change in the battery and has conductivity. For example, as the negative electrode current collector, copper, stainless steel, aluminum, nickel, titanium, fired carbon, copper or stainless steel whose surface is treated with carbon, nickel, titanium, silver, etc., an aluminum-cadmium alloy, etc. may be used. In addition, like the positive electrode current collector, the negative electrode current collector may be used in various forms such as a film, a sheet, a foil, a net, a porous material, a foam, nonwoven fabric, etc., having fine irregularities formed on the surface thereof.

The method of preparing an negative electrode is not particularly limited, and the negative electrode may be prepared by forming the negative electrode active material layer on the negative electrode current collector using a method of forming a layer or film commonly used in the art. For example, methods such as compression, coating, and deposition may be used. In addition, a case in which a metal lithium thin film is formed on a metal plate by initial charging after assembling a battery in the state in which the lithium thin film is not present on the negative electrode current collector is also included in the negative electrode of one aspect of the present disclosure.

## Method of preparing all-solid-state battery

One aspect of the present disclosure also relates to a method of preparing an all-solid-state battery.

The method of preparing an all-solid-state battery according to one aspect of the present disclosure includes (P1) locating a mixture for forming a positive electrode active material layer on one surface of a solid electrolyte membrane and forming a positive electrode on one surface of the solid electrolyte membrane by pressurization; and (P2) locating and pressing the negative electrode on the other surface of the solid electrolyte membrane.

In the step (P1), the mixture for forming the positive electrode active material layer may be located on one surface of the solid electrolyte membrane and pressurized at a high temperature to form the positive electrode on one surface of the solid electrolyte membrane.

The mixture for forming the positive electrode active material layer may include a positive electrode active material, a conductive material, and a binder. Specific types and weights of the mixture are as described above. In addition, after forming the positive electrode active material layer, the positive electrode may be prepared by attaching the current collector.

In addition, the pressing process may be performed at a pressure of 300 MPa to 500 MPa to bond the solid electrolyte membrane and the positive electrode, but to bond the solid electrolyte membrane and the positive electrode by reducing interfacial resistance. The pressure of the high-temperature pressing process may be 300 MPa or more, 350 MPa or more, or 400 MPa or more, and may be 450 MPa or less, 460 MPa or less, or 470 MPa or less. If the temperature and/or pressure of the high-temperature pressing process is less than the above range, the solid electrolyte membrane and positive electrode may not be integrated, and when the temperature and/or pressure exceeds the above range, the solid electrolyte membrane or positive electrode may be deformed or damaged.

In the step (P2), the all-solid-state battery may be prepared by locating an negative electrode on the other surface of the solid electrolyte membrane and pressing the negative electrode. The description for the negative electrode is as described above.

The pressure may be 40 MPa to 80 MPa during the pressing, and specifically, the pressure may be 40 MPa or more, 45 MPa or more, or 50 MPa or more, and may be 70 MPa or less, 75 MPa or less, or 80 MPa or less during the pressing. When the pressure is less than 40 MPa during the pressurization, the interfacial resistance between the negative electrode and the solid electrolyte membrane may increase, and when the pressure exceeds 80 MPa, the solid electrolyte or the negative electrode may be deformed or damaged.

Since the all-solid-state battery prepared in this way contains a solid electrolyte with a thin thickness, it is possible to lower the preparing cost and improve the ionic conductance and energy density.

In addition, since the solid electrolyte and the positive electrode are integrated by the high-temperature pressing process, it is possible to improve the interfacial stability.

**Battery module**

In addition, one aspect of the present disclosure relates to a battery module including the all-solid-state battery as a unit cell, a battery pack including the battery module, and a device including the battery pack as a power source.

In this case, specific examples of the device may include a power tool powered by an electric motor and moving; electric vehicles such as an electric vehicle (EV), a hybrid electric vehicle (HEV), and a plug-in hybrid electric vehicle (PHEV); electric two-wheeled vehicles including an electric bicycle (E-bike) and an electric scooter (E-scooter); an electric golf cart; and a system for power storage; and the like, but is not limited thereto.

Hereinafter, preferred Example will be provided in order to assist in the understanding of one aspect of the present disclosure. However, it will be obvious to those skilled in the art that the following Examples are only an example of one aspect of the present disclosure and various modifications and alterations may be made within the scope and spirit of one aspect of the present disclosure. In addition, it goes without saying that these modifications and alterations fall within the following claims.

In the following Examples and Comparative Examples, a solid electrolyte and all-solid-state batteries were prepared according to the compositions and processes as shown in Table 1 below.

[Table 1]

| | | solid electrolyte membrane | | | Calendering process | | | |
|---|---|---|---|---|---|---|---|---|
| | Sulfide-based solid electrolyte | Binder | | | Temperature (°C) | Orientation | Loop | Dry process or not |
| | | Material | Form | Content (wt%) | | | | |
| Example 1 | $Li_6PS_5Cl$ | PTFE | Fibrous | 0.5 | 90 | Biaxial | 15 times | Dry |
| Example 2 | $Li_6PS_5Cl$ | PTFE | Fibrous | 0.5 | 23 | Biaxial | 15 times | Dry |
| Example 3 | $Li_6PS_5Cl$ | PTFE | Fibrous | 0.5 | 60 | Biaxial | 15 times | Dry |
| Example 4 | $Li_6PS_5Cl$ | PTFE | Fibrous | 0.5 | 120 | Biaxial | 15 times | Dry |
| Example 5 | $Li_6PS_5Cl$ | PTFE | Fibrous | 0.5 | 90 | Uniaxial | 15 times | Dry |
| Example 6 | $Li_6PS_5Cl$ | PTFE | Fibrous | 0.5 | 90 | Biaxial | Twice | Dry |
| Example 7 | $Li_6PS_5Cl$ | PTFE | Fibrous | 0.5 | 90 | Biaxial | 5 times | Dry |
| Example 8 | $Li_6PS_5Cl$ | PTFE | Fibrous | 0.5 | 90 | Biaxial | 10 times | Dry |
| Example 9 | $Li_6PS_5Cl$ | PTFE | Fibrous | 0.5 | 90 | Biaxial | 30 times | Dry |

**Example 1**

A mixture obtained by mixing polytetrafluoroethylene (PTFE, Chemours) as a binder with $Li_6PS_5Cl$ powder as a sulfide-based solid electrolyte by mortar was subjected to a calendering loop 15 times with a roll press under a temperature of 90°C and biaxial orientation conditions to prepare a solid electrolyte membrane with a thickness of 300 μm. The preparing process was performed in a dry method without using a solvent.

**Example 2**

Example 2 was performed in the same manner as in Example 1, except that the temperature was set to 23°C.

### Example 3

Example 3 was performed in the same manner as in Example 1, except that the temperature was set to 60°C.

### Example 4

Example 4 was performed in the same manner as in Example 1, except that the temperature was set to 120°C.

### Example 5

Example 5 was performed in the same manner as in Example 1, except that the orientation condition of the calendering process was uniaxial orientation.

### Example 6

Example 6 was performed in the same manner as in Example 1, except that the calendering loop was performed twice.

### Example 7

Example 7 was performed in the same manner as in Example 1, except that the calendering loop was performed 5 times.

### Example 8

Example 8 was performed in the same manner as in Example 1, except that the calendering loop was performed 10 times.

### Example 9

Example 9 was performed in the same manner as in Example 1, except that the calendering loop was performed 30 times.

### Experimental Example 1: Internal structure of solid electrolyte membrane

An experiment was conducted to confirm an internal structure of the solid electrolyte membrane prepared in the Example.
FIG. 2A is images of the solid electrolyte membrane according to the temperature of the calendering process, obtained by a scanning electron microscope (SEM, FEI Apreo SEM).
Referring to FIG. 2A, it could be confirmed that, in the solid electrolyte membrane of Example 2 having the lowest temperature among Examples 1 to 4 had the structure in which fibrous binders were entangled with each other was not dense. From this, it can be seen that, when the temperature of the calendering process is too low, the strength of the solid electrolyte membrane is low.

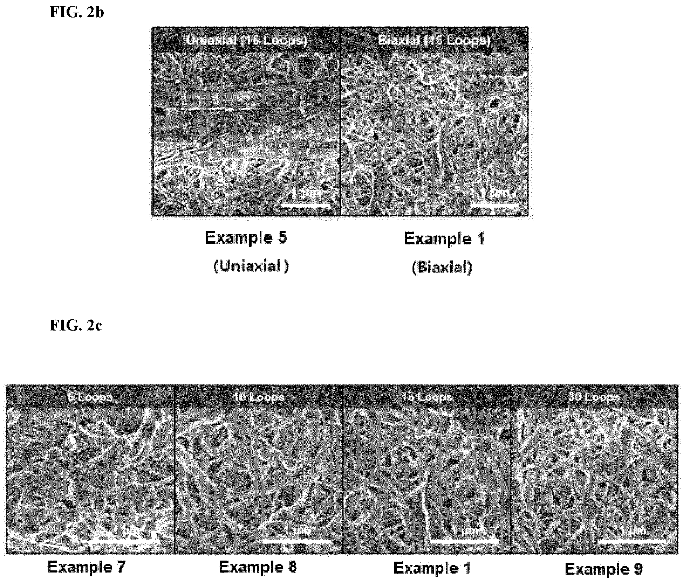

FIG. 2B is images of the solid electrolyte membrane according to the orientation of the calendering process, obtained by a scanning electron microscope (SEM, FEI Apreo SEM).
Referring to FIG. 2B, it can be seen that a three-dimensional network structure formed by entangling fibrous binders with each other in Example 1, which is biaxial, is more dense than Example 5, in which the orientation is uniaxial during the calendering process. From this, it can be seen that the strength of the solid electrolyte membrane will be further improved when the orientation is biaxial during the calendering process.
FIG. 2C is images of the solid electrolyte membrane according to the loop of the calendering process, obtained by a scanning electron microscope (SEM, FEI Apreo SEM).
Referring to FIG. 2C, it can be seen that the larger the loop of the calendering process, the denser the three-dimensional network structure formed by entangling the fibrous binders with each other. From this, it can be seen that as the number of times of repetitions of the loop increases during the calendering process, the strength of the solid electrolyte membrane is further improved.

**Experimental Example 2: Measurement of ionic conductivity and tensile strength of solid electrolyte membrane**

In order to confirm the physical properties of the solid electrolyte membrane prepared in the Example, an experiment was conducted to measure the ionic conductivity and tensile strength. The measurement method of the ionic conductivity and the tensile strength is as follows.

**(1) Measurement of ionic conductivity**

To measure the ionic conductivity of the solid electrolyte membrane, the solid electrolyte membrane was put in a polyether ether ketone (PEEK) holder with a diameter of 10 mm, and a titanium rod was used as a blocking electrode to measure the ionic conductivity.

After the resistance was measured at 25°C under conditions of an amplitude of 10 mV and a scan range of 1 Hz to 0.1 MHz by using an electrochemical impedance spectrometer (EIS, VM3, Bio Logic Science Instrument), the ionic conductivity of the solid electrolyte membrane was calculated by using the following Equation 1:

$$\sigma_i = \frac{L}{RA}$$

wherein, $\sigma_i$ denotes the ionic conductivity (mS/cm) of the solid electrolyte membrane, R denotes the resistance ($\Omega$) of the solid electrolyte membrane measured by the electrochemical impedance spectrometer, L denotes the thickness ($\mu$m) of the solid electrolyte membrane, and A denotes the area ($cm^2$) of the solid electrolyte membrane.

**(2) Measurement of tensile strength**

The solid electrolyte membrane was cut to a size of 10 mm $\times$ 50 mm. In order to minimize damage to the solid electrolyte membrane due to pinching during measurement, the tensile strength was measured using universal testing machine (UTM, MARK-10, M5-05) equipment after attaching tape to both ends of the sample.

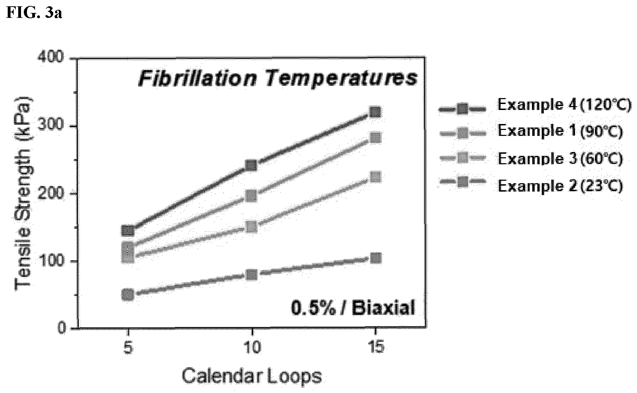

FIG. 3A is a graph illustrating a correlation between the temperature and the tensile strength of the calendering process.

Referring to FIG. 3A, it can be seen that the higher the temperature of the calendering process, the higher the tensile strength of the solid electrolyte membrane.

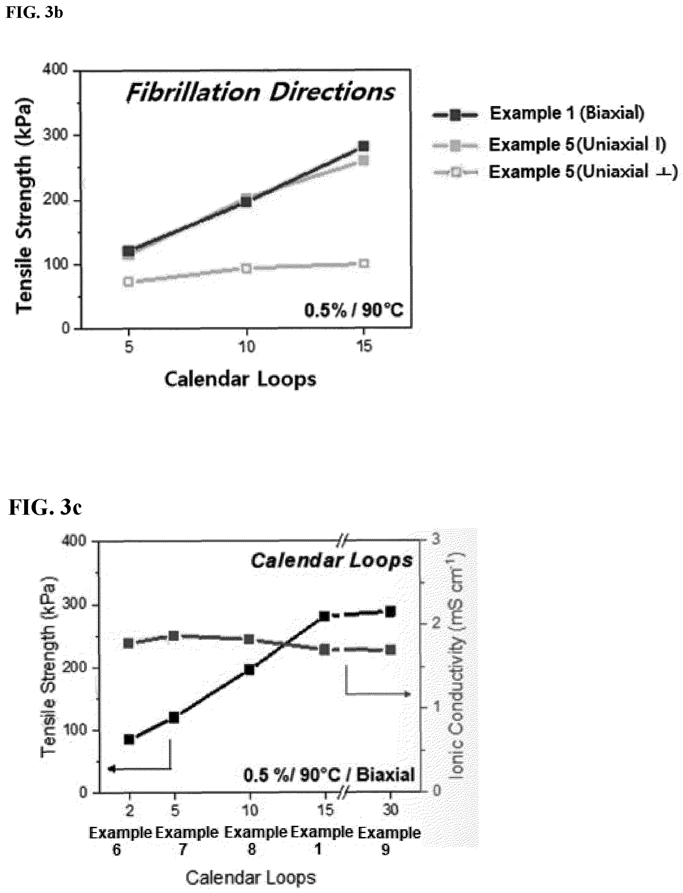

FIG. 3B is a graph illustrating a correlation between the orientation and the tensile strength of the calendering process. In this case, with respect to Example 5 in which the orientation of the calendering process was uniaxial, the tensile strength was measured in horizontal (uniaxial |) and vertical (uniaxial ⊥) directions with respect to the orientation of the calendering process, respectively.

Referring to FIG. 3B, when the orientation of the calendering process is biaxial or uniaxial (|), the tensile strength is similar, or as the number of calendering loops increases, the tensile strength is slightly higher when the orientation is biaxial. However, when the orientation of the calendering process is uniaxial, the tensile strength measured in a direction (uniaxial ⊥) perpendicular to the orientation is significantly lower than that of the biaxial or uniaxial (|) measured horizontally with respect to the orientation of the calendering process, and even if the calendering loop increases, the tensile strength hardly increases. From this, it could be seen that, when the orientation of the calendering process is uniaxial, the tensile strength has directionality.

FIG. 3C is a graph illustrating a correlation between the loop of the calendering process and the ionic conductivity and the tensile strength of the solid electrolyte membrane.

Referring to FIG. 3C, it can be seen that the ionic conductivity of the solid electrolyte membrane does not change significantly even when the loop of the calendering process increases, but the tensile strength increases.

From this, it can be seen that the temperature, orientation, and loop of the calendering process during the preparing of the solid electrolyte membrane affect the fiberization of the binder and the structure formed by the fiberized binder, and thus, are closely related to the tensile strength of the solid electrolyte membrane.

Hereinabove, although the present invention has been described by way of limited embodiments and drawings, the present invention is not limited thereto, but may be variously modified and altered by those skilled in the art to which the present invention pertains within the equivalent scope of the technical spirit the present invention and the claims to be described below.

Description of Main Elements:

1: Solid electrolyte membrane

10: Solid electrolyte (sulfide-based and/or halide-based)
20: Fibrous binder

**Claims**

1.  A method for preparing a solid electrolyte membrane film, comprising:

    (S1) mixing a plurality of solid electrolyte particles and a binder to form a mixture, wherein the binder is fiberized by the mixing; and
    (S2) applying the mixture obtained in (S1) to a calendering process to form a solid electrolyte membrane film.

2.  The method of claim 1, wherein a temperature of the calendering process is 50°C to 200°C.

3.  The method of claim 1, wherein the calendering process is performed for 5 to 50 loops.

4.  The method of claim 1, wherein the calendering process is performed uniaxially or biaxially.

5.  The method of claim 1, wherein (S1) and (S2) are performed solvent-free.

6.  The method of claim 1, wherein the solid electrolyte particles comprise one or more selected from the group consisting of sulfide-based solid electrolyte particles and halide-based solid electrolyte particles.

7.  The method of claim 1, wherein the solid electrolyte membrane film is composed of solid electrolyte particles and a fibrous binder.

8.  The method of claim 7, wherein the fibrous binder comprises one or more selected from the group consisting of polytetrafluoroethylene (PTFE) and a copolymer containing the same.

9.  The method of claim 7, wherein the fibrous binder is comprised in an amount of 2 wt% or less based on a total weight of the solid electrolyte membrane.

10. The method of claim 7, wherein the fibrous binder is comprised in a dispersed state in the solid electrolyte membrane.

11. The method of claim 7, wherein an interface between the solid electrolyte and the fibrous binder is bonded.

12. The method of claim 7, wherein an ionic conductivity of the solid electrolyte membrane is 0.5 to 10 S/cm.

13. The method of claim 7, wherein a tensile strength of the solid electrolyte membrane is 45 to 1000 kPa.

14. A solid electrolyte membrane film prepared according to the method of claim 1.

15. A all-solid-state battery comprising the solid electrolyte membrane film according to claim 14.

FIG. 1

1

Sulfide electrolyte  10

Fiberized binder  20  10

FIG. 2a

| 23°C (15 Loops) | 60°C (15 Loops) | 90°C (15 Loops) | 120°C (15 Loops) |
| Example 2 | Example 3 | Example 1 | Example 4 |

FIG. 2b

Example 5
(Uniaxial)

Example 1
(Biaxial)

FIG. 2c

Example 7     Example 8     Example 1     Example 9

FIG. 3a

**FIG. 3b**

**FIG. 3c**

# INTERNATIONAL SEARCH REPORT

| | International application No. |
|---|---|
| | **PCT/KR2024/096021** |

| **A.** | **CLASSIFICATION OF SUBJECT MATTER** |
|---|---|
| | **H01M 10/0562**(2010.01)i; **H01M 4/62**(2006.01)i |

According to International Patent Classification (IPC) or to both national classification and IPC

| **B.** | **FIELDS SEARCHED** |
|---|---|

Minimum documentation searched (classification system followed by classification symbols)

H01M 10/0562(2010.01); C01B 25/14(2006.01); H01M 10/052(2010.01); H01M 10/056(2010.01); H01M 10/42(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질막 (solid electrolyte membrane), 바인더 (binder), 섬유화 (fibrillation), 캘린더링 (calendering), 폴리테트라플루오로에틸렌 (polytetrafluoroethylene, PTFE)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | ZHANG, Z. et al. Flexible sulfide electrolyte thin membrane with ultrahigh ionic conductivity for all-solid-state lithium batteries. Nano letters. 2021, vol. 21, pp. 5233-5239 (supporting information pp. 1-21). See abstract; pages 5233-5235 and 5237; figures 1 and 1f; and supporting information, page 2, fabrication of SE membrane. | 1-15 |
| A | KR 10-2022-0058572 A (SOLVAY SPECIALTY POLYMERS ITALY S.P.A.) 09 May 2022 (2022-05-09) See abstract; paragraphs [0108]-[0132]; and claims 1-14. | 1-15 |
| A | KR 10-2023-0085316 A (HYUNDAI MOTOR COMPANY et al.) 14 June 2023 (2023-06-14) See abstract; and claims 1-12. | 1-15 |
| A | WO 2023-128580 A1 (LG ENERGY SOLUTION, LTD. et al.) 06 July 2023 (2023-07-06) See abstract; and claims 1-8. | 1-15 |
| A | KR 10-2023-0036851 A (SAMSUNG SDI CO., LTD.) 15 March 2023 (2023-03-15) See abstract; and claims 1-20. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2024** | **27 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/096021** |

| Patent document cited in search report | | | Publication date (day/month/year) | Patent family member(s) | | | Publication date (day/month/year) |
|---|---|---|---|---|---|---|---|
| KR | 10-2022-0058572 | A | 09 May 2022 | CN | 114303270 | A | 08 April 2022 |
| | | | | EP | 4026183 | A1 | 13 July 2022 |
| | | | | JP | 2022-545957 | A | 01 November 2022 |
| | | | | US | 2022-0278366 | A1 | 01 September 2022 |
| | | | | WO | 2021-043698 | A1 | 11 March 2021 |
| KR | 10-2023-0085316 | A | 14 June 2023 | CN | 116314581 | A | 23 June 2023 |
| | | | | US | 2023-0178745 | A1 | 08 June 2023 |
| WO | 2023-128580 | A1 | 06 July 2023 | CN | 117099235 | A | 21 November 2023 |
| | | | | EP | 4307422 | A1 | 17 January 2024 |
| | | | | JP | 2023-096783 | A | 07 July 2023 |
| | | | | KR | 10-2023-0132804 | A | 18 September 2023 |
| | | | | US | 2024-0274869 | A1 | 15 August 2024 |
| KR | 10-2023-0036851 | A | 15 March 2023 | WO | 2023-038392 | A1 | 16 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 23428623
- KR 1020230124429
- KR 1020240108292
- KR 20220095689